(19)

**Europäisches Patentamt**
**European Patent Office**
**Office européen des brevets**

(11)　**EP 4 154 727 A1**

(12)　# EUROPEAN PATENT APPLICATION
published in accordance with Art. 153(4) EPC

(43) Date of publication:
**29.03.2023 Bulletin 2023/13**

(21) Application number: **21772238.8**

(22) Date of filing: **29.03.2021**

(51) International Patent Classification (IPC):
**A23K 20/158** (2016.01)　　**A23K 20/24** (2016.01)
**A23K 40/30** (2016.01)　　**A23K 50/10** (2016.01)

(52) Cooperative Patent Classification (CPC):
**A23K 20/158; A23K 20/24; A23K 40/30;**
**A23K 50/10; A61J 1/00; A61J 1/03**

(86) International application number:
**PCT/CO2021/000002**

(87) International publication number:
**WO 2021/185386 (23.09.2021 Gazette 2021/38)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.05.2020 CO 20006220**

(71) Applicant: **Bialtec S.A.S**
**San Pedro De Los Milagros, 0510107 (CO)**

(72) Inventors:
• **AGUDELO RENDON, Javier Mauricio**
**San Pedro De Los Milagros, 0510107 (CO)**
• **ARROYABE MANCO, Juan Camilo**
**Piedecuesta - Bucaramanga, 681011 (CO)**
• **RUEDA ORDOÑEZ, Jorge Dario**
**San Pedro De Los Milagros, 0510107 (CO)**
• **SÁNCHEZ RENDÓN, Julián Andrés**
**Medellín,, 050001 (CO)**

(74) Representative: **Maslanka Kubik, Dorota Irena**
**C/Vara de Rey 5 TER, 3, Oficina 5**
**26003 Logroño (La Rioja) (ES)**

(54)　**FORMULATIONS OF FUNCTIONAL ADDITIVES AND METHOD FOR ENCAPSULATING SAME IN A HYDROPHOBIC MATRIX**

(57)　The present invention is related to the inclusion of dehydrated and encapsulated functional additives formulations in food matrices.

For the encapsulation of the additives, molten hydrophobic mixtures of fatty acids and long-chain saponified fatty acids were used under simple encapsulation techniques that require minimum residence times and early solidification.

These specific mixtures of coating materials and the manufacturing process confer physical and chemical resistance to the formulated additives, which allows their use as functional ingredients in industrial processes, such as the production of balanced foods, concentrated foods, dry or wet foods, for humans or animals; where extrusion, baking or pelletizing processes are used, without the additives losing their viability and activity.

EP 4 154 727 A1

**Description**

OBJECT OF THE INVENTION (BRIEF DESCRIPTION)

The present invention refers to functional additive formulations, the encapsulating matrix, and its encapsulation method, which provides a solution to improve the protection level of functional additives through a surface coating with a mixture of fatty acids and long-chain saponified fatty acids larger than ten carbon atoms under a particular encapsulation method, which does not exclude similar techniques. The saponified fatty acids of the present invention are also called carboxylic acid soaps or salts produced by alkaline hydrolysis of glycerides. The encapsulating agent resists high temperatures and mechanical processing stress, with controlled dissociation in the intestine initiated by previous chemical and enzymatic activity in the stomach. This behavior makes it possible to comply with the viability parameters of functional additives during their manufacture, conservation, and use.

The relevant aspects including in the present invention are:

(i) Encapsulating matrix: type and mixture of encapsulating materials,
(ii) Encapsulation method and the effectiveness thereof and
(iii) formulation as a specific combination of the different types of functional additives for specific practical applications, such as the replacement of animal growth-promoting antibiotics.

TECHNICAL FIELD OF THE INVENTION

The present invention is related to the development of hydrophobic encapsulating mixtures composed of fatty acids and long-chain saponified fatty acids in different proportions; the mixtures are used through a specific encapsulation method to manufacture microcapsules containing dry living probiotics, dry essential oils, dry natural active ingredients, dry organic acids, organic minerals, dry enzymes, vitamins, and prebiotics, which guarantee resistance to physical and chemical processes until their release at the intestinal level. The encapsulated functional additive formulations of the present invention can be used in animal nutrition with beneficial effects on the host's microbiota and intestinal health.

PRIOR STATE OF THE ART OR BACKGROUND OF THE INVENTION

The global trend in the prohibition of antibiotics to improve animal production and as a prophylactic treatment to avoid diseases during animal growth has increased due to the appearance of antibiotic-resistant pathogenic bacteria, which can be potentially harmful to humans. That has supported the research and increase of new functional additives and their specific formulas per food production to become one of the most critical nutritional strategies to produce safe and clean animal proteins without residues that may affect the health of the final consumer.

Functional additives, especially lyophilized probiotics, and some natural extracts such as cinnamaldehyde and garlic extract, are affected by long storage periods; and high temperatures process used in producing pelleted, baked, or extruded concentrated foods; and, by the conditions of the digestive processes. Therefore, these additives must be guaranteed to retain their initial activity or the highest percentage after being added and processed into food compositions. Thereby, encapsulation offers the potential to reduce adverse effects on the functional additive's viability.

The selection criteria of a functional additive for a particular application in animal nutrition include acidic pH tolerance to high temperatures, if possible, above 70 ° C for pelletizing and ideally above 110 ° C for extrusion, and to the oxidizing conditions of the environment that surrounds them (oxygen, humidity, and light). Additionally, in the case of probiotics, once in the intestine, they must retain the ability to grow, colonize, and adhere to the epithelium/tissue or modify the intestinal microbiota. If these conditions are fulfilled, the additives finally will be able to stimulate a response at the intestinal level that may include antimicrobial activity/antagonisms to pathogens; in addition, to improve other parameters in the host such as the food conversion factor, reduce the number of diseases on the farm and the number of deaths per batch. However, it is complicated to have a variety of additives, especially microorganisms that meet all these characteristics, including heat resistance per production processes, but with the ability to grow at body temperature, where only some sporulated microorganisms are included, e.g., *Bacillus subtilis.* For these reasons, encapsulation technologies that make it possible to protect other heat-sensitive or heat-labile additives, are relevant.

Conventional encapsulation technologies involve coating sensitive essential ingredients within a biopolymer shell, releasing its contents at controlled rates once activated by an external stimulus (e.g., temperature, pH, and enzymes). Although a wide variety of biopolymers have been used, including but not limited to whey, isolate whey protein, concentrate, maltodextrins, skim milk, chitosan, calcium/sodium alginate, acacia, and gelatin, or a combination of one or more of these support materials; carbohydrates, chitosan, and their combinations predominate, although they have weak protection against oxidation or extreme temperatures such as extrusions.

Below is presented the list of the found inventions that aim to solve the raised technical problem, as well as their main differences and limitations with the proposed inventive concept in this application:
Patent US 9906746 describes the coating of bacteria with polymers, such as polyacrylamides or copolymers associated with phospholipids, which are highly toxic.

Patent FR 9606215 describes the coating of bacteria with water-soluble polymers or polysaccharides. However, for the preservation of products containing microorganisms, it is essential to guarantee a low humidity level that does not reactivate the activity of the water before using it in the desired medium.

Other methods have been proposed to overcome the problems mentioned in the last patents, which use edible substances and are resistant to moisture (hydrophobic) as protective material.

According to the method described in patent DE 3738599, yeasts are encapsulated in fats such as fatty acid esters, where the melting temperature is higher than 29 ° C. In this wise, the beginning of fermentation is delayed for several hours, taking advantage of the progressive softening of the coating substance used.

The probiotic encapsulates described in patent WO 2009070012 A1 are based on proteins which suspension is sprayed on the probiotic component. Due to the disulfide crosslinking, they bind so that the probiotics are trapped within the matrix exhibiting minimal solubility in water.

Other inventions, such as the one described in patent WO 2012142153 A1, use alginate and denatured protein compositions as thermo-protective agents, achieving stable products to heat treatments up to 92 ° C. Nevertheless, the encapsulations described in these patents do not guarantee mechanical protection against compression, nor efficient thermal protection above 100 ° C.

Patent US 20120142531A1 also describes a formulation to improve the stability and viability of dehydrated microorganisms from the addition of a layer of hygroscopic salt (K2HP04, Na2 (HP04)), Na (P03)6, CH3COONa, (Mg (N03)2) of at least 25% by dry weight of the final formulation, with the possibility of adding other external coating layers of diverse nature. This improvement was designed for processing and storage in conditions of high humidity or high temperature; however, the temperatures reached in the said patent were only 75 ° C, which is not sufficient protection for an extrusion process, which can reach up to 120 ° C, like the one used to make pet food or fish food. It is also important to note that the hygroscopic salt referred to in the patent must have a pH that is compatible with the viability of the microorganism to be coated, which demands a higher specificity in the process. This fact can be tedious in practice due to the wide variety of probiotic microorganisms existing and working at different pH, many of them associated with specific sections of the intestine in which the pH varies between the values of 2 to 8 (closer to the rectum) according to the animal species. On the other hand, the results of the patent show that the coating material resists relative humidity of up to 75%; however, in the animal food industry, the food is sent to places where the relative humidity can easily be higher than 95%, and if the additive is mixed with a mineral salt for livestock in ratios 5 to 100 or higher, the ratio being understood as mass units of functional encapsulated additive per mass unit of mineral salt for livestock, and left in the open, the humidity will increase in such a way that it can solubilize the salts (deliquescence) leaving the microorganisms unprotected. Thus, these applications need to have chemically and physically stable coatings under the natural conditions of production and application in the animal industry.

The use of some saponified fatty acids, or also called calcium salts of hydrophobic fatty acids in livestock nutrition, described in patents US 4.642.317, 4.826.694, 4.853.233, 4.853.233, 4.909.138, y ES 2 188 433 T3, are proposed as a necessity to protect fatty acids, mainly omegas 3 and 6, from microbial action in the rumen to allow them to reach the intestine where they are adsorbed after enzymatic digestion and by pH action. The dairy industry widely accepts this form of protection from fatty acids. However, to date, it has not been considered whether these saponified fatty acids can be used as encapsulating material for other functional additives, where they can take advantage of their physicochemical stability properties in the environment, in concentrated foods, and their ability to dissociate to intestinal level.

There are some limitations of the use of these saponified fatty acids that contains a long chain greater than 10 carbons atoms as a potential encapsulating material, due to their high melting points, generally higher than 150°C, these temperatures would affect the viability of a wide range of functional additives, decreasing or altogether canceling their activity during the encapsulation process.

Therefore, the present invention proposes a methodology to reduce the melting point of said saponified fatty acids when they mix with previously melted long-chain fatty acids. The reduction of the melting point of the saponified fatty acid only occurs under certain specific combinations of types of fatty acids and saponified fatty acids and specific proportions or mass ratios between them. However, it also has the characteristic that it recovers its high melting point once sprayed and solidified.

In respect of encapsulation methods, most microbial cells are susceptible to inactivation during spray drying due to dehydration and thermal effects. The complexity lies in the simultaneous occurrence of the two previous events during the residence time of the particles in the drying chamber.

The most used process to preserve a great majority of probiotics until their final use is lyophilization. For example, patent WO 2015000972 A1 provides a lyophilization method where incubated cells are in a solution containing a cryoprotectant-surfactant for a specific time, the concentration of the cryoprotectant in the incubation solution increases serially with each subsequent incubation step; however, this protection requires that the additives are then stored at a low temperature and used directly at the consumer since an industrial process easily damages the viability of these, especially those of a probiotic nature.

Other studies refer to layer-by-layer encapsulation technologies (LBL), which attempt to protect the probiotic against different enzymatic and acid processes before reaching the intestine. For example, patent WO 9212234 refers to the encapsulation of lyophilized bacteria such as *Enterococcus faecium* in fatty acids such as stearic acid through a process carried out in a coating pan, where capsules are randomly formed from a solid composed of bacteria and tightly mixed fatty acids. These processes show an agglomeration tendency of the particles that affect the product's stability and that are controlled generally from the parameters inherent to the process, such as temperature, pressure, and coating speed. The invention presented in patent US 7157258B2 proposes an improvement related to this method. The invention describes a method based on rapid cooling of the coating substance's microdroplets when injected into a granulation chamber containing lyophilized microorganisms. The encapsulation achieved by this method permits increasing the resistance of the microorganisms subjected to humidity, acidity, compression, and temperatures up to 80 ° C. However, this type of coating shells includes compounds with low water impermeability; as described in patent US 20120142531A1, these materials do not improve viability in highly humid media in up to 5 months, nor the thermostability of the microorganisms at temperatures above 65 ° C. The products obtained through this process resist secondary pelletizing processes with temperatures of up to 75 ° C; however, they remain very unproductive in terms of their industrial incorporation into food matrices that use high-temperature processes (100-120 ° C) such as extrusion to produce pet or aquaculture concentrates.

To date, research on the encapsulation of functional additives has focused its efforts on maintaining the viability of additives at acidic pH and during spray drying, lyophilization and storage, neglecting the protection in the incorporation in processed foods. These investigations have focused on microencapsulation methods and manipulating its parameters, such as the types of coating materials and their concentrations and polymers not authorized for pharmaceutical, or food uses. Likewise, considering that previous encapsulation methods have required the use of water-in-oil or oil-in-water emulsions, multiple reaction steps, multiple coatings or encapsulation layers, or combinations of these, which turn out to be tedious and sometimes inefficient.

On the other hand, attempts to improve the viability of functional additives to high heat stress processes have not been efficient with many living microorganisms, mainly with lactic acid bacteria such as *lactobacillus* or *bifidobacteria,* nor with some natural extracts such as cinnamaldehyde and garlic. These lose their molecular structure at temperatures higher than 65 ° C, like those reached in pelletizing processes.

In addition, the advantages of using formulations of mixtures of probiotics and other functional additives encapsulated in the animal nutrition industry in a single formulation that favorably modifies the intestinal microbiota are not still established. Some studies have suggested; the greater variety of probiotic genera present within a formulation can reduce its effectiveness due to mutual inhibition of the different species or competition for nutrients or binding sites. The study of Kenya Honda Kenya et al., entitled: "Induction of Tregs by a rationally selected mixture of clostridial strains of the human microbiota", nature, 500 (2013), pp.232-236, shows that specific mixtures of probiotics can have a positive impact on the intestinal microbiota and specific conditions of the host, possibly because changes at the microbiota level are more probable with a set of cooperating microbes than with a single strain. Other parameters to consider in functional additive formulations are the age of the host and the general diet.

This invention proposes a technology that allows the preparation of shells or encapsulation matrices composed by fatty acids and saponified fatty acids mixtures that contain a high concentration of functional additives. These are also stable under high industrial process conditions, thermal stress such as those used in the manufacture of concentrated food, long storage periods in the environment, osmotic processes when mixed with mineral salts and subjected to outdoor conditions with high humidity, and digestive processes of monogastric and polygastric animals, besides of its elaboration method.

DETAILED DESCRIPTION OF THE INVENTION

The present invention is related to the encapsulation of dehydrated functional additive formulations in thermo-resistant matrices and their inclusion in processed or concentrated food.

For the encapsulation of the additives, the invention uses fused hydrophobic mixtures of fatty acids and long-chain saponified fatty acids under simple encapsulation techniques that require minimum residence times and early solidification. These specific mixtures of coating materials with the manufacturing method confer physical and chemical resistance to the formulated additives. That allows their use as functional ingredients in industrial processes, such as the production of balanced foods, concentrated foods, dry or humid foods, for humans or animals; where extrusion, baking, or pelletizing are used, without the additives losing their viability and activity. This encapsulation method allows, additionally, to protect functional additives from ruminal pH in polygastric animals and stomach acids in monogastric and polygastric animals, allowing their release in the intestine to exert their effect on the intestinal microbiota. The invention is implemented for dehydrated functional additives formulations of such as probiotics, prebiotics, enzymes, encapsulated essential oils or previously conveyed on a dry matrix, dehydrated natural active principles, organic acids, organic minerals, vitamins, as well as thermolabile molecules and their application in pharmaceutical, dietetic or food compositions.

The central idea of the present invention is related to mixtures of encapsulating materials, which include mixtures of fatty acids and saponified fatty acids with a long chain longer than 10 carbon atoms.

Saturated fatty acids are preferred over unsaturated ones due to their physicochemical properties, such as higher melting points and higher chemical stability understood as low reactivity under certain conditions. The encapsulating material, as it is composed of a physical mixture of fatty acids and saponified fatty acids with a long chain greater than 10 carbon atoms, allows the shell to resist temperatures between 70-120 ° C used in the elaboration of food products in animal nutrition such as pelletized extrusion or baking. Hence, it is ensured that the encapsulated additives, included in the concentrated food formulated in proportions of 50g/ton up to 3000g/ton, survive the host's gastric system and, due to a combined effect of pH and enzymes, dissociate so that the additive fraction functionalities that include probiotics, enzymes, prebiotics, and other additives are released generating a positive change in the intestinal level.

An essential aspect of the present invention is that, due to the use of substances of a hydrophobic nature as coating material, it is possible to use encapsulated probiotic formulations and combine them with highly hygroscopic mineral salts, used mainly in livestock, without these salts affect the viability of the encapsulated microorganism by breaking the cell wall. In this way, the present invention makes it possible to include the specific combination of probiotic strains, dry natural extracts or absorbed on natural polymers, encapsulated prebiotics, and mineral salts with therapeutic or nutritional effects within the same food composition that confer benefits on the host's health.

The encapsulation method of the present invention occurs inside a rotating chamber. First, there is a mass of microorganisms in permanent rotation. Then, the material is added uniformly through a micro-droplet sprinkler molten encapsulant. The chamber that contains the microorganisms to be coated is at room temperature, which is compatible with the survival of the more heat-sensitive microorganisms. The critical factor that controls the viability of the microorganisms in this stage is the solidification speed of the encapsulating material. This factor, due to the particle size of the drops that can be obtained with a sprinkler of the conical type with a hole or solid cone with dispersion angle standard and nozzle hole between 0.030 to 0.2 inches (0.0762 to 0.508 centimeters) in diameter or a conical weir with a mouth diameter between 1/8" and 1" preferably between 1/4" and 1/2" loses enough energy for immediate solidification on the additive, without causing significant loss of viability in dehydrated living microorganisms or measurable damage to the chemical structure of thermolabile molecules such as some natural extracts.

The formulations of the present invention are specific combinations of functional additives such as living thermosensitive microorganisms of a different probiotic nature, including *Lactobacillus spp., Bifidobacterium spp., Enterococcus faecium, Saccharomycescerevisiae var Boulardii, SaccharomycesCerevisiae,* mixed with polysaccharide prebiotics such as fructooligosaccharides and mananooligosaccharides and yeast cell walls and in some cases natural dehydrated plant extracts or absorbed functional oils on natural flours or polymers such as cinnamaldehyde and garlic extract. The specific formulations of the present invention can be used as functional additives in the preparation of concentrated animal food, particularly in weaned piglets, allowing to improve performance and efficient replacement in the use of animal growth-promoting antibiotics.

The present invention provides a technology to elaborate or prepare hydrophobic encapsulating matrices, also known as coatings or shells or covering layers, highly stable, through specific mixtures of fatty acids and saponified fatty acids with a long chain greater than 10 atoms of Carbon to be used as an encapsulating material for functional additives due to its hydrophobic physical properties, its stability, its high melting point, and its dissociation in the intestine. The use of fatty acids mixed with saponified fatty acids represents a significant difference from traditional compositions for producing encapsulation matrices of living microorganisms and other functional additives. The term "saponified fatty acids" or "saponified lipids" or "soap" or "carboxylic salt" in the present invention refers to fatty acids bound to divalent cations such as magnesium (Mg2 +) or calcium (Ca2 +), generally produced by alkaline hydrolysis of glycerides. Especially, magnesium stearate or calcium palmitate, or calcium soaps produced by hydrolysis of palm stearin with calcium oxide or hydroxide are preferred, any saponified of the GRASS type fatty acids (Generally Recognized as Safe Substances) saturated and unsaturated with a high melting point higher than 100 ° C, preferably higher than 150 ° C.

Under gastric conditions, these dissociate or hydrolyze at pH less than 3, at temperatures between 37 and 39 ° C and with the action of pepsins in times higher than 1 hour and a half, preferably 1 hour, to release the functional additive in the intestine and performs its function on the microbiota. As the functional additive is released, the encapsulating matrix is adsorbed in the body through the metabolic pathway of fats. Long-chain saturated fatty acids longer than 10 carbon atoms are preferred as fatty acids due to their high melting point, preferably stearic acid (C18: 0), palmitic acid (C16: 0), but is also useful myristic acid (C14: 0), oleic acid (C18: 1), arachidic acid (C20: 0), lauric acid (C12: 0), capric acid (C10: 0).

The main characteristics of encapsulating matrices are their melting point that can be between 60 and 140°C, preferably between 70 and 120°C; the ratio between fatty acid and saponified fatty acid that determines the melting point of the coating and that varies between 0.05 and 19, preferably between 1 and 19, understanding the ratio as the amount in mass units (g, Kg, ton) of saponified fatty acid per each mass unit (g, kg, ton) of fatty acid. For ratios close to 0.05, the coating may be inadequate for protection in extrusion processes because the melting point will be closer to the fatty acid than the saponified fatty acid. Another characteristic of encapsulating matrices is their physicochemical stability, understood as the ability not to react or break in the face of stressful environmental conditions such as relative humidity above 95% and even in aqueous solutions. The encapsulating matrix is stable when the solution has a pH greater than 3 and temperatures below 37 ° C. These encapsulating matrices do not affect ruminal metabolism; they are insoluble in the rumen and resist the enzymatic action of ruminal microorganisms, they do not affect fiber digestion, once they reach the abomasum they are hydrolyzed, and the fatty acids and the free ion are absorbed in the intestine.

According to the present invention, the encapsulating matrix includes dry functional additives, dry enzymes, essential oils encapsulated or absorbed on a dry matrix, dry natural active principles, organic acids, organic minerals, among others, where the mass ratio of the encapsulating matrix with the amount of functional additive it varies between 40 to 90% by weight of the final encapsulated product, preferably between 50 and 60%.

As used in the present invention, the term functional additive, includes dry or lyophilized thermolabile or thermosensitive microorganisms such as *Lactobacillus spp., Bifidobacterium spp, Enterococcus faecium, Saccharomycescerevisiae var. Boulardii, SaccharomycesCerevisiae,* and its combination with polysaccharide prebiotics such as fructooligosaccharides and mannanoligosaccharides, in addition to the yeast cell wall and some cases thermolabile natural extracts such as cinnamaldehyde extract or garlic extract, which, as proposed by the European Food Safety Authority, are considered as zootechnical additives, in the category of digestibility enhancers or stabilizers of the intestinal microbiota and GRASS.

The dried probiotic microorganisms of the present invention are living cells that have been dried by lyophilization or drying techniques that guarantee post-processing viability. Its shape can be spherical, ovoid, or elongated, smooth or rough, regular, or irregular, and whose size can be between 1 $\mu$m and 1000 $\mu$m in diameter.

Next are some important taxonomic genera:

a. *Bifidobacterium spp*

Bifidobacterium spp, found in the *Bifidobacterium* family, is a Gram-positive bacterium that is not mobile, anaerobic, and non-spore-forming. Instead, the bacterium is rod-shaped and can live in groups, pairs, or even independently. Most of the Bifidobacterium population has been found in the colon, lower small intestine, and breast milk; however, Bifidobacterium spp is found mainly in the large intestine. *Bifidobacterium spp* is found mainly in the large intestine. *Bifidobacterium* helps the body absorb calcium, iron, magnesium, vitamins, and minerals, and it also produces lactic and acetic acids to inhibit pathogenic bacteria. As a result, it can reduce the incidence of severe diarrhea in neonates and is beneficial in treating inflammatory bowel disease (colitis). The metabolic mechanism can be by heteromorphosis to ferment glucose, galactose, and fructose, to produce lactic and acetic acid, and to produce enzymes and vitamins. *Bifidobacterium* bifidum is the most popular probiotic *Bifidobacterium* and the most dominant in the intestine of neonates, which is why they are called in some cases "growth factors".

b. *Lactobacillus spp*

Lactobacillus spp is a gram-positive bacterium rod-shaped and often found in the small intestine. It produces lactic acid, acetic acid, and antibiotics that protect against harmful bacteria. Lactobacillus spp is also Co-assistant in maintaining the balance of the intestinal microbiota and stimulating the immune system. Lactobacillus spp. is a homofermentative and microaerophilic species; it ferments sugars into lactic acid and multiplies at relatively low pH values (below pH 5.0); it has an optimal growth temperature of around 37 ° C. *Lactobacillus* is part of the natural microbiota in mammals located in the gastrointestinal tract, the animal mouth, and urinary tract. It has the typical character of lactic acid bacteria to produce lactic acid, acetic acid, and natural antimicrobials such as acidolin, acidophilin and aethocydon, which helps inhibit the other pathogenic bacteria. It can grow both in residual oxygen or not; although it grows better in an aerobic environment, it can even survive in media with nitrogen dioxide. It can also create lactase, an enzyme that turns lactose (milk sugar) into simple sugar.

c. *Enterococcus faecium*

*Enterococcus faecium* is a gram-positive bacterium that inhabits the gastrointestinal tracts of humans and other mammals. *Enterococcus faecium* is an immobile, facultative anaerobic microbe; It ferments glucose without gas production, it does not produce the catalase reaction with hydrogen peroxide. It produces lactic acid, vitamins, enzymes, and antibacterial substances and inhibits the growth of *E-coli, Salmonella,* and *Staphylococcus aureus.* It strengthens the immune system, improves disease resistance, reduces digestive tract and respiratory diseases, lowers fecal ammonia concentrations, and improves breeding.

d. *Saccharomycesspp.*

*Saccharomycesspp* belongs to the genus of yeasts of the saccharomycetaceae family; It is a eukaryotic cell different from prokaryotic bacteria; the cells are spheroidal, ellipsoidal, or cylindrical. S. *cerevisiae var Boulardii* is widely used in monogastric nutrition due to its benefits at the intestinal level, its outstanding resistance to antibiotics, because it is a yeast and not a bacterium, and because of its wide growth range at different pH values. This yeast competes directly with *Streptococcus bovis* in sugar consumption, reducing the occurrence of this bacterium capable of destabilizing the intestines and rumen and associated in some cases with tumors or intestinal lacerations; this is a significant effect in the probiotic use of yeast.

A test to probe thermal resistance was performed by subjecting the encapsulating matrix of the present invention in conjunction with other encapsulating matrices developed from conventional compounds such as stearic acid. The thermal process was carried out at 70 ° C and 2 hours, and losses of less than 10% were evidenced on a logarithmic basis of the matrix reported in this invention, and losses of complete viability for the other matrices. Another test of the thermal stability of probiotic bacteria covered by the shell described in the present invention was analyzed in an extrusion process to produce concentrated pet food where temperatures between 100 and 120 ° C are used for up to 3 minutes. Again, the results showed the viability of the microorganism higher than 85% measured on a logarithmic basis, preferably between 85-90% after the process. The concentration of viable bacteria is expressed as CFU / g: the unit that forms a colony per gram of coated particles of the microorganism before and after each exposure. According to conventional techniques, the measurement method is based on the microbiological count of colonies after breaking the encapsulating matrix and an appropriate dilution.

In another test, ruminal, gastric, pancreatic stability, and intestinal release were analyzed for an encapsulated yeast by the technology described in the present invention. The results showed more than 75% viability, preferably between 80-90%, after ruminal, gastric, and pancreatic digestions. In addition, in a comparative in vivo test, it was possible to recover the additive from the fecal matter of a bovine supplemented with an encapsulated yeast described by the method of the present invention, a case that was not evidenced with the yeast encapsulated with stearic acid. The results showed the release and growth capacity of the additive in the intestine from the protection provided by the encapsulating matrix of this invention compared to other matrices used for the same purpose.

Otherwise, the variation of the physicochemical stability understood as the ability not to react, not solubilize and not break in time during storage and particular uses, was evaluated under harsh conditions when mixing additives encapsulated by the technology described in the present invention, with mineral salts for livestock containing 24% sodium chloride, 2.5% phosphorus, 13% calcium, 3% magnesium, 10% sulfur, 0.028% fluorine, 0.2% copper, zinc al 0.6%, iodine at 0.01 % and cobalt at 0.01%, stored outdoors in open salting rooms and places with a relative humidity higher than 94%, specifically between 95-96%. For more than 5 days, the viability of the encapsulated additives was evaluated while the mixture was wetted to the point of deliquescence, where the mineral salts were solubilized. The results showed that 85% of the additive viability was preserved after testing, and the encapsulating matrix never hydrated or broke or solubilized or reacted with the mixture.

Another object of the present invention is the referred method for coating the functional additive. This method consists of several stages, as shown in figure 1:

(i) Encapsulating matrix: The fatty acid is previously melted in a pot at a controlled temperature between 60-75 ° C. Subsequently, the finely ground powdered saponified lipid is added to the pot to achieve the encapsulating mixture in the desired ratios according to the application, preferably in a mass ratio between 1-19 mass of saponified fatty acid per mass of fatty acid. Finally, the mixture is shaken for a specified time, between 2-20 minutes.

(ii) Functional additives: The dry functional additives, which may include microorganisms, are deposited in a rotating cylindrical chamber of 1.2 m in diameter equipped with a deflector with an inclination between 0 and 90 ° to the vertical wall chamber, preferably between 30 ° -45 °, and a drip sprinkler or weir. The chamber's rotation speed is measured as revolutions per minute (rpm) is controlled by a variable frequency drive from 0 to 60 Hz, preferably between 20-40 Hz for a speed of rotation between 80-200 rpm.

(iii) encapsulation process: It is initiated by the controlled rotation of the mass of functional additives that hit the deflector, causing turbulence in the dry mass. After reaching a suitable rotation speed, the spraying of the encapsulating mixture is started at an average speed of 2-4 L / min, preferably between 3-3.5L / min. The chamber's temperature is at room temperature, which is compatible with the survival of the most thermo-sensitive or thermo-labile microorganisms. The inclination of the internal deflector to the vertical plane of the chamber and the speed of rotation determines the degree of dispersion and homogenization of the dry functional additives, which allows the molten encapsulating material to be added uniformly through a conical type sprinkler with a hole or solid cone with standard dispersion angle and nozzle hole between 0.030 to 0.2 inches (0.0762 to 0.508 centimeters) in diameter or from a conical weir with a mouth diameter between 1/8 "and 1", preferably between 1/4 "- 1/2". In addition, the deflector also controls the particle size since its degree of inclination and collision with the mass of additives breaks the aggregates of larger spheres, individualizing them into smaller spheres (iv).

Once the spraying operation is finished, the rotational movement of the chamber stops, and the encapsulated product is collected. The final temperature of the products is generally between 35 and 40 ° C.

For saponified fatty acid/fatty acid mass ratios of 0.05 and 1, it is also feasible to use encapsulation techniques such as those used in fluidized bed chambers.

Some ratios of fatty acids and saponified fatty acids that make up the encapsulating matrix affect its viscosity, making it necessary to use a conical weir instead of a droplet sprinkler with a mouth diameter between 1/8 "and 1", preferably between 1/4"- 1/2". Other mass ratios of the encapsulating matrix components can be highly viscous. Viscosity measurements can be determined among other methods through the MFI melt index. In cases where the MFI is lower than 16, the use of other conventional encapsulation techniques such as melt injection or melt extrusion is preferred in which functional additives are deposited on the molten encapsulating matrix and then injected through a filter or extrusion screw, preferably operating between 100 and 130 ° C to form pellets. Sometimes, to apply these extrusion processes on the functional additives to be encapsulated, it is necessary to first carry out an initial coating with an encapsulating matrix such as the one described in this invention with a mass ratio between saponified fatty acids and fatty acids between 0.05 and 1.

As an important notation, the encapsulations obtained in the rotating chamber are different from those obtained in conventional spray towers or other rotating chambers. The technique to which the present invention refers prioritizes the relation between saponified fatty acids and fatty acids as a fundamental parameter to control the agglomeration of particles and to favor a determined particle size.

The encapsulated functional additive particles obtained through this method and with the encapsulating matrix technology have an average size between 20 and 2000 μm in diameter, preferably between 500-1300 μm, where the mechanical resistance is favored by the chemical structure of the shell and its homogeneous composition of hydrophobic material that does not show cavities on the surface allowing complex conditions of use.

In a particular essay, the use of an injection encapsulation method of melted mass was tested when the mass ratio of saponified fatty acids/fatty acids was higher than 9, preferably 17-19. The results shown that this method encapsulated additive and whit the encapsulating matrix of the present invention, conserved a high viability after the process.

Finally, when the specific combined use of certain functional additives that are encapsulated with the encapsulating matrix of the present invention are dosed on pelletized animal food, it confers benefits in the host's health on a determined period of life and, they are a sustainable and natural alternative for profitable livestock production when substituting growth promoter antibiotics use. It was evidenced that encapsulation of several probiotic strains with the encapsulating matrix of the present invention promotes at an intestinal level a positive response on microbiota at a taxonomic genus level and species on weaned piglets in the pre-fattening stage during the first 70 days of life. Additionally, the consumption of these functional additives improves food conversion, and, at the same time, they replace the prophylactic animal growth-promoting antibiotics.

For instance, an important aspect of the present invention provides a formulation of substitutes functional additives of antibiotics on weaned piglets composed by encapsulated microorganisms such as, *Saccharomycescerevisiae, Saccharomycesboulardii, Enterococcus faecium, Lactobacillus casei, Lactobacillus acidophilus,* that once incorporated as functional additives in a pelletized concentrated food for weaned piglets based on grains such as corn and soy, lactose, fish meal, hemoglobin, amino acids, minerals, and vitamins; showed a significant improvement (P<0,05) in the food conversion factor compared to those foods that contained antibiotic additives such as animal growth promoters and foods that did not have probiotic or antibiotic additives. The food conversion factor is expressed as the relation between the food consumption in mass units and the pig's weight gain in mass units in a given time; this period could be weekly, monthly, or stages.

Following are described examples of encapsulating mixtures of saponified fatty acids and fatty acids with different active ingredients applications with variations in both the correlation between fatty acids and saponified fatty acids and the connection between active ingredients and the encapsulating matrix, as well as different techniques used according to the rheology of the encapsulating mixture and its application, several specific formulations of encapsulated functional additives are also described that were evaluated to replace growth-promoting antibiotics and improve food conversion.

**EXAMPLE 1**

*Enterococcus faecium* coating with a stearic acid and magnesium stearate (saponified lipid) mixture with a melting point above 75 ° C.

Lyophilized *Enterococcus faecium* bacteria powder, SF-GA12 strain, registered in the CCTCC with the number M 2015444, are introduced in a rotating cylindric chamber with a deflector.

The stearic acid was melted in a pot at a controlled temperature of 65-71 ° C. Once the stearic acid has melted, the magnesium stearate (melting point 150-160 ° C) is added. This mixture was sprayed into the rotating chamber containing the lyophilized bacteria powder. The percentage of the encapsulating matrix is 48-50% of the final weight of the encapsulated product. Therefore, the ratio of the encapsulating mixture (g of magnesium stearate / g of stearic acid) is between 0.9-1.2.

The coating operation was carried out according to the following parameters:

Chamber rotation speed: 80-110 rpm
Coating speed: 3-3.5 L/min.
Stearic acid and magnesium stearate mixture temperature: 70-100 ° C.
Product temperature when leaving the chamber: 35-40 ° C.
Deflector angle: 45 °

At the end of the operation, the particles are collected and stored in hermetic sachets.

The obtained particles have the following characteristics:
The average diameter of the particles is 1400 $\mu$m, with 92% between 1000 and 1800 $\mu$m in diameter.

The concentration of viable bacteria in the starting powder is between $2\times10^{10}$ and $1.7\times10^{10}$ CFU / g, and at the end of the operation, the coated particles have a concentration between $1.3\times10^{10}$ and $1\times10^{10}$ CFU / g. The result shows a recovery percentage of viable cells on a logarithmic basis of 98% according to the following formula:

$$1 - \frac{Log\,(2\text{ x }10^{10}) - \mathrm{Log}\,(1.3\text{ x }10^{10})}{Log\,(2\text{ x }10^{10})} = 0{,}98$$

**EXAMPLE 2**

*Lactobacillus casei* coating with melting point above 90°C.

Lyophilized *Lactobacillus casei* faecium bacteria powder, LG-G11 strain, registered in the CCTCC with the number M 2013196, was introduced in the same rotating cylindric chamber with deflector as in example 1. The stearic acid was melted in a pot at a controlled temperature, as in example 1. Once the stearic acid had melted, the magnesium stearate (melting point 150-160 ° C) was added. This mixture was sprayed into the rotating chamber as in example 1. The percentage of the encapsulating matrix is 48-50% of the final weight of the encapsulated product. Therefore, the ratio of the encapsulating mixture (g of magnesium stearate / g of stearic acid) is between 0.3-0.45

The coating operation was carried out according to the following parameters:

Chamber rotation speed: 80-120 rpm.
Coating speed: 3-3.5 L/min.
Stearic acid and magnesium stearate mixture temperature: 70-100 ° C.
Product temperature when leaving the chamber: 35-40 ° C.
Deflector angle: 70 °.

At the end of the operation, the particles are collected and stored in hermetic sachets.

The obtained particles have the following characteristics:
The average diameter of the particles is 800 $\mu$m, with 92% between 500 and 1200 $\mu$m in diameter.

The concentration of viable bacteria in the starting powder is between $1\times10^{10}$ and $9\times10^{10}$ CFU / g, and at the end of the operation, the coated particles have a concentration between $5\times10^{9}$ and $4\times10^{9}$ CFU / g. The result shows a recovery percentage of viable cells on a logarithmic basis of 97% according to the following formula:

$$1 - \frac{Log\,(1\text{ x }10^{10}) - \mathrm{Log}\,(7\text{ x }10^{9})}{Log\,(1\text{ x }10^{10})} = 0{,}97$$

**EXAMPLE 3**

Coating of a mixture of functional additives with a melting point above 90 ° C.

A formulation of the following lyophilized probiotics: *Lactobacillus Casei, Lactobacillus Acidophilus, Bifidobacterium Bifidum,* and *Enterococcus Faecium,* was previously mixed and homogenized in a powder mixer. Once finished the homogenization, this mixture was introduced in the same rotating chamber as in example 1. Subsequently, the mixture of molten encapsulating material formed by stearic acid and magnesium stearate was added. The mixture was previously carried out in a pot at a controlled temperature, as in Example 1. The percentage of the encapsulating matrix is 55-60% of the final weight of the encapsulated product. Therefore, the ratio of the encapsulating mixture (g of magnesium stearate / g of stearic acid) is 3.5-4.

The coating operation was carried out according to the following parameters:

Chamber rotation speed: 80-120 rpm
Coating speed: 3-3.5 L/min.
Stearic acid and magnesium stearate mixture temperature: 70-100 ° C.
Product temperature when leaving the chamber: 35-40 ° C.
Deflector angle: 35°

At the end of the operation, the particles are collected and stored in hermetic sachets.

The obtained particles have the following characteristics:
The average diameter of the particles is 900 $\mu$m, with 90% between 600 and 1500 $\mu$m in diameter.

The concentration of viable bacteria in the starting powder is lyophilized *Lactobacillus Casei* $2\times10^9$ CFU/g, lyophilized *Lactobacillus Acidophilus* $2\times10^9$ CFU/g, lyophilized *Bifidobacterium Bifidum* $2\times10^9$ CFU/g, lyophilized *Enterococcus Faecium* $2\times10^9$ CFU/g. After the encapsulation process, the average concentration of coated particles is $1\times10^9$ CFU/g of each bacterium. The result shows a recovery percentage of viable cells on a logarithmic basis of 98% according to the following formula:

$$1 - \frac{Log\,(8\,x\,10^9) - \text{Log}\,(5\,x\,10^9)}{Log\,(8\,x\,10^9)} = 0{,}98$$

**EXAMPLE 4**

*Saccharomyces cerevisiae* coating with a melting point above 90°C.

Commercial dry living yeast of the genus *saccharomyces* and the species *cerevisiae* were introduced in a rotating chamber with a deflector like in example 1. As in example 1, the mixture formed by stearic acid and magnesium stearate was prepared in a pot at a controlled temperature. Then, the mixture was sprayed into the rotating chamber, as in example 1. The percentage of the encapsulating matrix is 45-55% of the final weight of the encapsulated product. Therefore, the ratio of the encapsulating mixture (g of magnesium stearate / g of stearic acid) is between 1-2.

The coating operation was carried out according to the following parameters:

Chamber rotation speed: 80-120 rpm
Coating speed: 2-4 L/min.
Stearic acid and magnesium stearate mixture temperature: 70-100 ° C.
Product temperature when leaving the chamber: 35-40 ° C.
Deflector angle: 40°

At the end of the operation, the particles are collected and stored in hermetic sachets.

The obtained particles have the following characteristics:
The average diameter of the particles is 1100 $\mu$m, with 92% between 500 and 2200 $\mu$m in diameter.

The concentration of viable bacteria in the starting powder is between $8.5\times10^9$ and $9\times10^9$ CFU/g, and at the end of the operation, the coated particles have a concentration between $7\times10^9$ and $6\times10^9$ CFU / g. The result shows a recovery percentage of viable cells on a logarithmic basis of 99% according to the following formula:

$$1 - \frac{Log\,(9\,x\,10^9) - \text{Log}\,(7\,x\,10^9)}{Log\,(9\,x\,10^9)} = 0{,}99$$

**EXAMPLE 5**

Comparative thermal stability

Dry yeast particles Saccharomyces cerevisiae type were coated with stearic acid through a process carried out in a granulation chamber with rapid microdroplets cooling of coating substance. As in example 4, dry yeast particles Saccharomyces cerevisiae type were encapsulated. Both products were studied under the following conditions:
3g samples of each preparation were introduced into sealed tubes kept in a water bath at 75 ° C. A tube of each preparation was removed from the water bath after 1, 4, 7, and 24 hours to determine the concentration of viable cells.
The results listed in the following table refer to CFU/g concentrations for a given time range and its viability loss through time taking as reference base the concentration reported in t=0h.

| Time (h) | 0 | 1 | 4 | 7 | 24 |
|---|---|---|---|---|---|
| Sample 1 (Encapsulated yeast with stearic acid) | $1 \times 10^{10}$ | $1 \times 10^3$ | No count | No count | No count |
| Sample 2 (Encapsulated yeast from example 4) | $1 \times 10^{10}$ | $1 \times 10^{10}$ | $1 \times 10^{10}$ | $9 \times 10^9$ | $8 \times 10^9$ |

When both samples reached 67°C, the encapsulated yeast with stearic acid (sample 1) began to melt its coating leaving the yeast exposed, thus promoting the viability loss in each sampling. After 4 hours of being under the test conditions, sample 1 completely lost its viability. On the other hand, sample 2 yeast continued stable during the 24h of the entire experiment. Thus, superior hydrophobic protection is demonstrated using of the mixture of fatty acid and long-chain saponified fatty acid as encapsulating material.

**EXAMPLE 6**

*Thermal stability, recovery in extruded food.*
The encapsulation additives formulation from example 3 was dosed at a rate of 500g of encapsulated additives per ton of food in the industrial production of an extruded pet food processed in a single crew extruder that operates at a temperature between 100-120°C. Subsequently to the food production process, the food was sampled and analyzed in the laboratory to count CFU/g. The Table 2 presents the results and are compared with the initial formulation.

| Additive formulations | Average concentration |
|---|---|
| Encapsulated lactic acid bacteria formulation (LAB) from example 3 before adding to the extruded food. | $2.5 \times 10^6$ CFU/g of extruded food. |
| Encapsulated lactic acid bacteria formulation (LAB) encapsulated in extruded food after production. | $8 \times 10^5$ CFU/g of extruded food. |

The fatty acids and saponified fatty acids from example 3 allowed the formulation of additives composed of lactic acid bacteria to hold the extrusion process and maintain an appropriate concentration of viable cells for commercial use.

**EXAMPLE 7**

Coating of a *Saccharomyces cerevisiae* yeast with a mixture of palm stearin (palmitic acid) and palm stearin saponified with calcium hydroxide (calcium palmitate) with a melting temperature higher than 120 ° C through melt injection.
Encapsulated yeast particles from Example 4 were coated through a mix by injection with a molten viscous mass composed of palm stearin and calcium palmitate. The mixture was let into an extrusion screw that works between 100 and 120 ° C to form pellets. The percentage of the encapsulating matrix is 40-70% of the final weight of the encapsulated product. Therefore, the mass ratio of the encapsulating mixture (g of palm stearin / g of calcium palmitate) is between 0.1 - 0.3.
The coating operation was carried out according to the following parameters:

Screw rotor frequency: 15-50 Hz
Palm stearin and calcium palmitate mixture temperature: 80-140° C.

Product temperature when leaving the chamber: 50-60 ° C.

At the end of the operation, the pellets are collected and stored in hermetic sachets.

The obtained particles have the following characteristics:

The average diameter of the particles is 2000 $\mu$m, with 92% between 1000 and 2900 $\mu$m in diameter.

The concentration of viable bacteria in the starting powder is between $2\times10^9$ and $2.8\times10^9$ CFU/g, and at the end of the operation, the coated particles have a concentration between $1\times10^9$ and $1.2\times10^9$ CFU / g. The result shows a recovery percentage of viable cells on a logarithmic basis of 97% according to the following formula:

$$1 - \frac{Log\,(2\times10^9) - \text{Log}\,(1\times10^9)}{Log\,(2\times10^9)} = 0{,}97$$

## EXAMPLE 8

Weatherability of the encapsulation matrix in hygroscopic media with mineral salts.

Dry yeast particles *Saccharomyces cerevisiae* type microsphere shape, deposited species in the CNCM with the number NCYC Sc 47 I-440 (sample 1), and encapsulated dry yeast particles *Saccharomyces cerevisiae* type according to example 4 (sample 2) were studied with the following conditions:

10 grams of each sample were homogeneously mixed with 150g of a mineralized salt for fattening cattle composed of 24% sodium chloride, 2.5% phosphorus, 13% calcium, 3% magnesium, 10% sulfur, 0.028% fluorine, 0.2% copper, 0.6% zinc, 0.01% iodine and 0.01% cobalt. Subsequently, the salts mixtures with yeasts are left open weather where the relative humidity is 95% in an open saltshaker for 4 days. Every 24h, a 5g sample was taken from each trial, and the CFU / g were evaluated.

The results listed in the following table refer to CFU/g concentrations for a given time range and its viability loss through time taking as reference base the concentration reported in t=0h.

| Time | 0 | 24 h | 48 h | 72 h | 96 h |
|---|---|---|---|---|---|
| Commercial dry yeast | $1\times10^{11}$ | $1\times10^5$ | $1\times10^1$ | No count | No count |
| Encapsulated yeast from example 4 | $7\times10^9$ | $7\times10^9$ | $7\times10^9$ | $6\times10^9$ | $6\times10^9$ |

After 24h commercial dry yeast, began to rapidly lose activity (CFU/g) and after 72h it didn't show activity. On the other hand, the encapsulated yeast with the hydrophobic mixture of fatty acids and saponified fatty acids described in the present invention showed activity throughout the test, remaining functional for its final use.

## EXAMPLE 9

*Ruminal, gastric, and pancreatic stability, with study of release in the intestine and recovery in feces.*

Encapsulated yeast samples from example 4 were used in an *in vitro* test developed in three phases and an application *in situ:*

First phase: Ruminal digestion

1.5g encapsulated yeast samples were taken according to example 4 and packed in 20 ANKOM F57 bags, specially designed for this type of incubation with a pore size of 50 $\mu$m. Before placing the sample inside, the bags were labeled and weighed. Furthermore, incubation in the ruminal liquid was realized during 48h with regular shaking and at a controlled temperature of 39°C in DAISY II equipment, ANKOM Technology. Ruminal digestion used culture media with microorganisms and a McDougall buffer solution (NaHCO3 (9.8 g/L), Na2HPO4(2.44 g/L), KCl (0.57 g/L), NaCl (0.47 g/L), MgSO4·7H2O (0.12 g/L), CaCl2·2H2O(0.16 g/L)) to keep a constant pH. The ruminal content was taken from 4 animals cannulated to the rumen.

Subsequently, the bags were taken to the laboratory where the CFU/g of encapsulated yeast were measured. Data are presented in the following table:

| CFU/g before digestion | CFU/g after ruminal digestion |
|---|---|
| $5 \times 10^{10}$ | $1 \times 10^{10}$ |

The samples with the encapsulated coating reported in the present invention showed their capacity to resists ruminal conditions, showing matrix physicochemical stability to neutral pH and microbiological action of ruminal microbiota.

Second phase: Gastric digestion

1.5g encapsulated yeast samples were taken according to example 4 and packed in 20 ANKOM F57 bags, specially designed for this type of incubation with a pore size of 50 $\mu$m. Before placing the sample inside, the bags were labeled and weighed. Furthermore, incubation in the ruminal liquid was realized during 1h in chlorohydric acid solution 0.1M (HCl) pH2, under pepsin action at 37-39°C with regular shaking, simulating stomachal digestion conditions. After 2h of incubation, the bags were taken to the laboratory to make microbiological culture. Data are presented in the following table:

| CFU/g before digestion | CFU/g after gastric digestion, solid phase | CFU/g after gastric digestion, liquid phase |
|---|---|---|
| $5 \times 10^{10}$ | $1 \times 10^{10}$ | $3 \times 10^8$ |

The evidence of the effectiveness of the coating by the encapsulating mixture became evident during the first hour, the encapsulating matrix was able to preserve 60% of the initial weight of encapsulated additive located in the respective bags, after the first hour, the acid hydrolyzed the encapsulating material evidenced by a greater loss in mass and a reduction in the size of the encapsulated additives, at 2h a CFU / g counting was made of the residual solid phase and the liquid phase, the colony counting demonstrates the protection that the coating achieves over the encapsulated additives at those pH conditions over time. Monogastric animals have stomach transit times close to 1 hour for which it is expected that the encapsulated content will be released in the intestine which is located immediately after the stomach system.

Third phase: Pancreatic digestion

10 resulting samples from the acid digestion and their liquid content were taken; an incubation was carried out in a potassium phosphate solution (KH2PO4) with pancreatin (an enzyme with lipase activity) in a period of 4-8 h. Subsequently, the samples were cultured in Sabouraud dextrose Agar, and after 48h, the colony counting was done.

| CFU/g before digestion and after acid digestion | CFU/g after pancreatic digestion solid phase | CFU/g after pancreatic digestion liquid phase |
|---|---|---|
| $1 \times 10^{10}$ | $1 \times 10^9$ | $2 \times 10^8$ |

This pancreatic digestion test simulates a part of the intestine where enzymes are liberated with lipase activity to hydrolyze triglycerides and release fatty acids. The conclusion was that the comminated action of acids and stomachal enzymes with the pancreatic lipases could unfold the encapsulating matrix releasing functional additives at the intestinal level to produce their effect on the intestinal microbiota.

*In vivo* test

Dry yeast particles Saccharomyces cerevisiae type coated with fatty acids, obtained as in example 4, were studied under the following conditions:
*In vivo* test of cattle prolonged exposure to encapsulated living yeast supplementation with stearic acid and encapsulated yeast as in example 4 was done. For 26 days, 2 bovines were inoculated with 1g/day of living encapsulated yeast with stearic acid, and 2 bovines were inoculated with 1g/day of living yeast with encapsulating matrix of the present invention prepared as in example 4. In addition, on days 22, 23, 24, 255, and 26, feces samples were taken and cultured to identify the recovery of Saccharomyces cerevisiae using the API 20 C AUX method from bioMérieux SA.
The results showed that *Saccharomyces cerevisiae* was recovered from the bovines' feces supplemented with living encapsulated yeast, as in example 4. On the other hand, it was impossible to recover the living encapsulated yeast with stearic acid of any bovine supplemented with this sample. Thus, this test demonstrated the efficiency and protection capacity and controlled release of the encapsulated additives with the encapsulated matrix of this invention, which guarantees the beneficial effects on the intestinal microbiota of polygastric animals.

**EXAMPLE 10**

*Application of two specific formulations of encapsulated additives to replace animal growth-promoting antibiotics.*
*In vivo* test with weaned piglets divided into 4 groups, with four different diets (D1, D2, D3, and D4), evaluated the effect in the food conversion, the intestinal microbiota composition, and the replacement of animal growth-promoting antibiotics from day 21 (weaning) until the day 70 of life. Each group had an average of 9,52 animals and three (3) replications of the entire trial, for 111 evaluated animals in total, where 27,75 animals were evaluated on average per diet. Following, the conditions and the results of the trial are shown.

*Diet 1 (D1)*

Pelletized concentrated food for weaned piglets based on grains such as corn and soy, lactose, fish meal, hemoglobin, amino acids, minerals, and vitamins, plus a specific formulation of functional additives incorporated in the 500g/ton dose of food base. The specific formulation 1 of functional additives contains:
*Saccharomyces cerevisiae* $1.2 \times 10^9$ CFU/g encapsulated as in example 4, S. *boulardii* $2 \times 10^8$ UFC/g y *E. faecium* $4 \times 10^8$ UFC/g encapsulated as in example 1 of the present invention.

*Diet 2 (D2)*

Pelletized concentrated food for weaned piglets based on grains such as corn and soy, lactose, fish meal, hemoglobin, amino acids, minerals, and vitamins, plus a specific formulation of functional additives incorporated in the 500g/ton dose of food base. The specific formulation 2 of functional additives contains:
Encapsulated *Saccharomyces cerevisiae* $1.2 \times 10^9$ CFU/g as in example 4, S. *boulardii* $2 \times 10^8$ CFU/g, E. *faecium* $4 \times 10^7$ CFU/g, *Lactobacillus casei* $3.7 \times 10^8$ CFU/g and encapsulated *Lactobacillus acidophilus* $3.7 \times 10^8$ CFU/g as in example 3.

*Diet 3 (D3)*

Pelletized concentrated food for weaned piglets based on grains such as corn and soy, lactose, fish meal, hemoglobin, amino acids, minerals, and vitamins, plus the following animal growth-promoting antibiotics: Doxycycline 0.08% of the formulation, Zinc bacitracin 0.05% of the formulation, valosin 0.04% and neomycin 0.02% of the formulation.

*Diet 4 (D4)*

Pelletized concentrated food for weaned piglets based on grains such as corn and soy, lactose, fish meal, hemoglobin, amino acids, minerals, and vitamins, without the addition of probiotic or antibiotic additives.
Evaluation conversion factor results (CF) for each one of the 4 diets are listed in Table 4. The diets with functional additives content D1 and D2 were those where the piglets had to be fed with less concentrate to gain 1.0 kg of body mass.

| Diets | Average cumulative food conversion from day 21 to day 70 of life | Total number of animals evaluated in the three repetitions |
|---|---|---|
| Diet 1 | 1.48 | 29 |
| Diet 2 | 1.51 | 28 |
| Diet 3 | 1.58 | 27 |
| Diet 4 | 1.57 | 27 |

In the trial, the supplemented diets with encapsulated functional additives improved the food conversion for diet 1 between 5% and 8%, preferably between 6% and 7%, according to the antibiotics diet, this when is compared to diet 3, showing efficacy in the zootechnic response of the specific formulation of encapsulated functional additives trough the described techniques in the present invention.

In diet 2 trial, supplemented with encapsulated functional additives improved the food conversion for diet 1 between 3% and 7%, preferably between 5% and 6%, according to the antibiotics diet, showing efficacy in the zootechnic response of the specific formulation of encapsulated functional additives trough the described techniques in the present invention. Additionally, during trial 36 feces samplings were taken to determine fecal microbiota of the piglets and seek for changes at the level of bacterial communities that could be related with the use of different diets. The sampling of the animals and the sequencing technique used are described below.

Additionally, during the test, 36 fecal matter samples were taken to determine the fecal microbiota of the piglets and look for changes at the level of bacterial communities that could be related to the use of different diets. The sampling of the animals and the sequencing technique used are described below.

From each of the four diets, 9 animals were randomly chosen, divided into groups of three according to the different growth stages of the trial; for greater clarity, the following sampling table is presented.

| Diet | Piglet's stage 1= first weaning week | Piglet's stage 2 = third weaning week | Piglet's stage 3 = seventh weaning week | Total sampled animals |
|---|---|---|---|---|
| Diet 1 | M1, M2, M3 | M4, M5, M6 | M7, M8, M9 | 9 |
| Diet 2 | M10, M11, M12 | M13, M14, M15 | M16, M17, M18 | 9 |
| Diet 3 | M19, M20, M21 | M22, M23, M24 | M25, M25, M26 | 9 |
| Diet 4 | M27, M28, M29 | M30, M31, M32 | M33, M34, M35 | 9 |

Single or paired-end sequence reads were generated using the Illumina NovaSeq 6000 or MiSeq system. The generated sequences with the MiSeq system were realized under accreditation according to the scope of the provider. (L457; NEN-EN-ISO / IEC 17025). When the paired-end sequencing is made, the "Reading numbers" refers to reading pairs.

The files of FAST sequences were generated using bcl2fastq2, 2.18 version. The initial quality evaluation was based on data through the Illumina Chastity filter. Subsequently, the sequences that contained the PhiX control signal were eliminated using an internal device of filter protocol. Moreover, sequences containing (partial) adapters) were trimmed (to a minimum reading length of 50 bp).

The second quality evaluation was based on the remaining sequences using the quality control tool FASTQC 0.11.5 version.

Paired-end sequences were collapsed into the so-called pseudo threads using sequence overlap with USEARCH 9.2 version (Edgar, 2010).

The pseudo-processes classification is accomplished in function of the alienation results with SNAP 1.0.23 version (Zaharia et al., 2011) against the database RDP (Cole et al., 2014) for bacterial organisms, while the fungal organisms are classified using the genes database UNITE ITS (Abarenkov et al., 2010).

Results showed that many of the encapsulated species with the encapsulated matrix of the present invention were identified mostly (higher probability of finding) in the animals that consumed these diets, compared to the animals that consumed other diets.

Results showed that many of the encapsulated species with the present invention's encapsulated matrix were primarily identified (higher probability of finding) in the animals that consumed these diets, compared to those that consumed other diets.

| Lactobacillus acidophilus | | | | |
|---|---|---|---|---|
| Diet | Piglet's stage 1 | Piglet's stage 2 | Piglet's stage 3 | Total positive simples for *L. Acidophilus* |
| Diet 1 | 0/3 | 1/3 | 1/3 | 2 (22%) |
| Diet 2 | 3/3 | 3/3 | 2/3 | 8 (89%) |
| Diet 3 | 1/3 | 1/3 | 0/3 | 2 (22%) |
| Diet 4 | 3/3 | 1/3 | 0/3 | 4 (44%) |

| Lactobacillus casei | | | | |
|---|---|---|---|---|
| Diet | Piglet's stage 1 | Piglet's stage 2 | Piglet's stage 3 | Total positive samples for *L. casei* |
| Diet 1 | 0/3 | 0/3 | 0/3 | 0 (0%) |
| Diet 2 | 1/3 | 0/3 | 0/3 | 1 (11.1%) |
| Diet 3 | 0/3 | 0/3 | 0/3 | 0 (0%) |
| Diet 4 | 0/3 | 0/3 | 0/3 | 0 (0%) |

| Enterococcus faecium | | | | |
|---|---|---|---|---|
| Diet | Piglet's stage 1 | Piglet's stage 2 | Piglet's stage 3 | Total positive samples for *E. Faecium* |
| Diet 1 | 0/3 | 1/3 | 0/3 | 1 (11.1%) |
| Diet 2 | 1/3 | 0/3 | 0/3 | 1 (11.1%) |
| Diet 3 | 1/3 | 0/3 | 0/3 | 1 (11.1%) |
| Diet 4 | 0/3 | 0/3 | 0/3 | 0 (0%) |

The main conclusion of this analysis is that animals that consumed diet 2 (D2) showed a higher probability in their feces of detecting sequences of encapsulated bacterial strains, which is strongly related with the formulation of these in said diet.

The main conclusion of this analysis is that animals that consumed diet 2 (D2) showed a higher probability in their feces of detecting sequences of encapsulated bacterial strains, which is strongly related to the formulation of these in the said diet.

Regarding the bacterial diversity understood as the richness and relative abundance of the intestinal microbiota of the animals associated with the different diets, it was found that the animals that consumed Diet D2 supplemented with encapsulated additives had greater bacterial diversity ($p < 0,05$) compared to basal diet D4 when analyzing Shannon's entropy, in the same diet D2, a higher bacterial richness ($p < 0.05$) was observed compared to the other diets when analyzing the Chao index, the analysis were carried out using a one-factor ANOVA and a Tukey HSD test, while the antibiotic diet had a higher probability (66.6%) of reducing bacterial diversity compared to the other diets when using the Simpson index in a probability analysis by quartiles, in this same analysis, it was found that 77.7% of the samples of the diet D2 were located in the first two quartiles (50%) with a value between 0.0135 and 0.0461 of Simpson indices, while 44.4% of Simpson indices of diets D1 and D4 were in the first two quartiles and 55% in the last two. For clarity, check the following table:

| Diets | Simpson indices (D) | Shannon entropy | Chao index |
|---|---|---|---|
| D2 | 0,0135 | 7,24 | 557,2 |
| D2 | 0,0172 | 6,88 | 517,7 |
| D3 | 0,0239 | 6,57 | 413,9 |
| D3 | 0,0276 | 6,29 | 409,9 |
| D2 | 0,0293 | 6,47 | 484,4 |
| D2 | 0,0302 | 6,31 | 461,5 |
| D2 | 0,0306 | 6,06 | 403 |
| D4 | 0,0331 | 6,17 | 431,3 |
| D1 | 0,0338 | 6,1 | 414,6 |
| D1 | 0,0358 | 6,33 | 482,1 |
| D2 | 0,0364 | 6,17 | 424,9 |
| D4 | 0,0367 | 6,25 | 469,8 |

(continued)

| Diets | Simpson indices (D) | Shannon entropy | Chao index |
|---|---|---|---|
| D3 | 0,0393 | 5,86 | 312,2 |
| D4 | 0,0398 | 5,96 | 391,5 |
| D1 | 0,0422 | 5,76 | 334,4 |
| D4 | 0,0435 | 5,8 | 354,6 |
| D2 | 0,0457 | 6,02 | 408,1 |
| D1 | 0,0461 | 5,97 | 411,3 |
| D4 | 0,0465 | 5,2 | 218,4 |
| D4 | 0,0471 | 5,48 | 276,8 |
| D1 | 0,0512 | 5,69 | 283,7 |
| D1 | 0,0531 | 5,42 | 253,1 |
| D3 | 0,0604 | 5,18 | 248,1 |
| D3 | 0,061 | 5,03 | 205,6 |
| D2 | 0,0615 | 5,87 | 433,5 |
| D4 | 0,0621 | 5,45 | 256,3 |
| D1 | 0,0645 | 5,24 | 280,8 |
| D3 | 0,0689 | 5,46 | 394,4 |
| D2 | 0,0728 | 5,61 | 375,5 |
| D1 | 0,0774 | 5,24 | 283,2 |
| D3 | 0,0867 | 4,99 | 302,4 |
| D3 | 0,0926 | 4,8 | 183,2 |
| D3 | 0,123 | 4,36 | 208,8 |
| D4 | 0,134 | 4,22 | 200,7 |
| D1 | 0,23 | 3,77 | 156,2 |
| D4 | 0,254 | 3,05 | 108,1 |

**Claims**

1. A hydrophobic encapsulating matrix to protect the functional additives, comprising fatty acids and saponified fatty acids mixtures with divalent cations of Mg and Ca, in a ratio between 0,05 and 19; wherein the said matrix contains long-chain saturated fatty acids longer than 10 carbon atoms from de group: stearic acid (C18: 0), palmitic acid (C16: 0), myristic acid (C14: 0), oleic acid (C18: 1), arachidic acid (C20: 0), lauric acid (C12: 0), capric acid (C10).

2. A hydrophobic encapsulating matrix to protect the functional additives according to claim 1, comprising fatty acids and saturated and unsaturated GRASS type saponified fatty acids with a melting point higher than 100°C.

3. A hydrophobic encapsulating matrix to protect the functional additives according to claim 1, characterized because it protects: dry functional additives, dry enzymes, encapsulated or absorbed essential oils on a dry matrix, organic minerals, among others; where the mass proportion of the encapsulating matrix to the amount of functional additive varies between 40 to 90% by weight of the final encapsulated product, preferably between 50 and 60%.

4. An encapsulating method to protect functional additives according to claim 4, comprising the following stages: i) Melting the fatty acids in a pot and mixing them with the saponified fatty acids ii) Add, in the rotating chamber, the functional additives, iii) Sprinkle or pour the melted mixture into a rotating chamber characterized for a speed between 80-200 RPM and contains a deflector with an inclination between 0-90°C relative to the vertical plane of the chamber.

5. An encapsulating method to protect functional additives according to claim 4, is **characterized in that** the melted mixture of fatty acids and saponified fatty acids is sprinkled or poured into the rotating chamber in the range between 40-90°C.

6. An encapsulating method to protect functional additives according to claim 4, is characterized for the size of the functional additive particles, which have an average size between 20 and 200 $\mu$m in diameter, preferably between 500 and 1300.

7. An encapsulating method to protect functional additives, according to claim 4, is **characterized in that** molten encapsulating material is added uniformly through a droplet sprinkler, wherein the said sprinkler is the conical type with a hole or solid cone with standard angle dispersion and nozzle hole between 0.030 to 0.2 inches (0.0762 to 0.508 centimeters) in diameter.

8. An encapsulating method to protect functional additives according to claim 4, is **characterized in that** molten encapsulating material is added uniformly through a conical weir with a mouth diameter between 1/8" and 1" preferably between 1/4" and 1/2.

9. A formulation of multispecies strains as a functional additive comprising a mixture of probiotic species of the type: Saccharomyces cerevisiae $1.2 \times 10^9$ CFU / g, Saccharomyces C. var. Boulardii $2 \times 10^8$ CFU / g, Enterococcus faecium $4 \times 10^7$ CFU / g, Lactobacillus Casei $3.7 \times 10^8$ CFU / g and Lactobacillus Acidophilus $3.7 \times 10^8$ CFU / g, all of them coated with the encapsulating matrix of claim 1 in weight/weight percentage between 40-60% of the final weight of the encapsulated probiotics.

10. A formulation of multispecies strains as a functional additive according to claim 9, **characterized in that** they are added in proportions of 50 to 3000 g/ton in animal concentrated food.

11. A formulation of multispecies strains as a functional additive comprising a mixture of probiotic species *Saccharomyces cerevisiae* type $1.2 \times 10^9$ CFU / g, *Saccharomyces C. var Boulardii* type $2 \times 10^8$ CFU / g and *Enterococcus faecium* type $4 \times 10^8$ CFU / g, coated with the encapsulating matrix of claim 1 in weight/weight percentage between 40-60% of the final weight of the encapsulated probiotics.

12. A formulation of multispecies strains as a functional additive according to claim 11, **characterized in that** they are added in proportions of 50 to 3000 g/ton in animal concentrated food where extrusion, pelletizing, or baking processes are required and that required to resist temperatures between 70-120°C.

## INTERNATIONAL SEARCH REPORT

| International application No. |
| --- |
| PCT/CO2021/000002 |

**A. CLASSIFICATION OF SUBJECT MATTER**

CIP: A23K20/158; A23K20/24; A23K40/30; A23K50/10 (2021.01)

According to International Patent Classification (IPC) or to both national classification and IPC

**B. FIELDS SEARCHED**

Minimum documentation searched (classification system followed by classification symbols)

CIP: A23K20/158; A23K20/24; A23K40/30; A23K50/10

Documentation searched other than minimum documentation to the extent that such documents are included in the fields searched

Electronic data base consulted during the international search (name of data base and, where practicable, search terms used)

STN, ESPACENET, GOOGLE SCHOLAR, PUBMED, INAPI

**C. DOCUMENTS CONSIDERED TO BE RELEVANT**

| Category* | Citation of document, with indication, where appropriate, of the relevant passages | Relevant to claim No. |
| --- | --- | --- |
| X  Y | US 2009/0252833 A1 (ROMAN, E. A.) 08-10-2009. The whole document. | 1-8  9-12 |
| X  Y | EP 3011839 A1 (CANTINI, F.) 27-04-2016. The whole document. | 1-8  9-12 |
| Y | RAM, T. et al. Using ruminally protected and nonprotected active dried yeast as alternatives to antibiotics in finishing beef steers: growth performance, carcass traits, blood metabolites, and fecal Escherichia coli. Journal of animal Science, 2018, vol. 96, no 10, p. 4385-4397. doi: 1Q.1093/jas/sky272 The whole document. | 9-12 |

☐ Further documents are listed in the continuation of Box C.　　☒ See patent family annex.

| * | Special categories of cited documents: | |
| --- | --- | --- |
| "A" | document defining the general state of the art which is not considered to be of particular relevance | "T"　later document published after the international filing date or priority date and not in conflict with the application but cited to understand the principle or theory underlying the invention |
| "E" | earlier application or patent but published on or after the international filing date | "X"　document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"　document member of the same patent family |

| Date of the actual completion of the international search | Date of mailing of the international search report |
| --- | --- |
| 12 July 2021 | 06 August 2021 |

| Name and mailing address of the ISA/ | Authorized officer |
| --- | --- |
| ANAPI | |
| Facsimile No. | Telephone No. |

Form PCT/ISA/210 (second sheet) (January 2015)

## INTERNATIONAL SEARCH REPORT

| International application No. |
| --- |
| PCT/CO2021/000002 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.:   1-12 (in part)
   because they relate to parts of the international application that do not comply with the prescribed requirements to such an extent that no meaningful international search can be carried out, specifically:

   **(see supplemental sheet)**

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

INTERNATIONAL SEARCH REPORT
Information on patent family members

International application No.

PCT/CO2021/000002

| US 2009/0252833 A1 | 08-10-2009 | US2009252833 (A1) | 08-10-2009 |
| | | US8182851 (B2) | 22-05-2012 |
| | | CA2657429 (A1) | 27-12-2007 |
| | | EP2037907 (A2) | 25-03-2009 |
| | | EP2037907 (A4) | 25-11-2009 |
| | | MX2008016400 (A) | 26-03-2009 |
| | | US2008008779 (A1) | 10-01-2008 |
| | | US7939117 (B2) | 10-05-2011 |
| | | US2009252837 (A1) | 08-10-2009 |
| | | US8178138 (B2) | 15-05-2012 |
| | | WO2007149818 (A2) | 27-12-2007 |
| | | WO2007149818 (A3) | 20-03-2008 |
| EP 3011839 A1 | 27-04-2016 | None | |

Form PCT/ISA/210 (patent family annex) (January 2015)

INTERNATIONAL SEARCH REPORT

International application No.

PCT/CO2021/000002

(Continuation of Box II)

Claims 1-12 are not fully supported in the description since only the use of stearic acid and palmitic acid is sufficiently described in the 10 examples of the description. For this reason, the hydrophobic encapsulating matrix comprising stearic acid, palmitic acid and same saponified with Mg and/or Ca (1-3), as well as the encapsulation method in which they participate (4-8) and the formulation including the encapsulating matrix (9-12), are taken into account for the purposes of the search and analysis of the claims.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9906746 B
- FR 9606215
- DE 3738599
- WO 2009070012 A1
- WO 2012142153 A1
- US 20120142531 A1
- US 4642317 A
- US 4826694 A
- US 4853233 A
- US 4909138 A
- ES 2188433 T3
- WO 2015000972 A1
- WO 9212234 A
- US 7157258 B2

**Non-patent literature cited in the description**

- **HONDA KENYA et al.** Induction of Tregs by a rationally selected mixture of clostridial strains of the human microbiota. *nature,* 2013, vol. 500, 232-236